# EUROPÄISCHE PATENTSCHRIFT

(11) **EP 2 474 089 B1**
(45) Veröffentlichungstag und Bekanntmachung des Hinweises auf die Patenterteilung: **18.12.2013**
(21) Anmeldenummer: 10772955.0
(22) Anmeldetag: 06.09.2010
(51) Int. Cl.: H02P 8/12, H02P 8/14, H02P 8/16, H02P 8/34

(54) **VERFAHREN UND SCHALTUNGSANORDNUNG ZUR SENSORLOSEN MOTORLASTERFASSUNG UND ZUR LASTWERTABHÄNGIGEN MOTORSTROMREGELUNG BEI SCHRITTMOTOREN**
METHOD AND CIRCUIT ARRANGEMENT FOR SENSORLESS MOTOR LOAD DETECTION AND FOR CONTROLLING THE MOTOR CURRENT IN ACCORDANCE WITH THE LOAD VALUE IN STEPPER MOTORS
PROCÉDÉ ET CIRCUITERIE POUR DÉTECTER LA CHARGE D'UN MOTEUR, SANS CAPTEUR, ET POUR RÉGULER L'INTENSITÉ EN FONCTION DE LA VALEUR DE LA CHARGE DANS DES MOTEURS PAS-À-PAS

(30) Priorität: 05.09.2009 DE 102009040139
(43) Veröffentlichungstag der Anmeldung: 11.07.2012
(73) Patentinhaber: Trinamic Motion Control GmbH & Co. KG, 22769 Hamburg (DE)
(72) Erfinder: DWERSTEG, Bernhard, 21129 Hamburg (DE); LARSSON, Lars, 20249 Hamburg (DE)
(74) Vertreter: Heun, Thomas
(86) Internationale Anmeldenummer: PCT/DE2010/075085
(87) Internationale Veröffentlichungsnummer: WO 2011/026489

(56) Entgegenhaltungen:
- EP-A1- 0 087 172
- EP-A1- 0 119 097
- DE-A1- 4 141 081
- DE-A1- 10 006 648
- JP-A- 63 234 897
- US-A- 4 739 346
- US-A- 5 838 132
- US-A1- 2005 134 211

## Beschreibung

Die Erfindung betrifft ein Verfahren und eine Schaltungsanordnung, mit dem/der bei einem Schrittmotor eine an der Motorwelle anliegende mechanische Last oder ein Lastwinkel des Motors sensorlos erfasst werden kann. Die Erfindung betrifft ferner ein Verfahren und eine Schaltungsanordnung, mit dem/der der Motorstrom eines Schrittmotors lastwertabhängig oder lastwinkelabhängig so geregelt werden kann, dass der Stromverbrauch des Motors möglichst gering ist.

Schrittmotoren werden üblicherweise unabhängig von einer momentanen tatsächlichen Motorlast, d.h. einem aufzubringenden Drehmoment, so angesteuert und mit Strom beaufschlagt, dass sie beim Auftreten einer bei einer bestimmten Anwendung zu erwartenden höchsten Motorlast ein ausreichendes Drehmoment erzeugen. Folglich werden bei solchen Anwendungen nur zwei Lastsituationen unterschieden, nämlich der Stillstand und der Betrieb des Motors.

Da das Drehmoment und das Haltemoment eines Schrittmotors in weiten Bereichen proportional zu dem RMS- (root mean square) Wert des Motorstroms, multipliziert mit dem Sinus des Lastwinkels ist, wird der Motor in den meisten Situationen mit einem im Verhältnis zur momentanen tatsächlichen Motorlast viel zu hohen Motorstrom, d.h. einer viel zu hohen Drehmomentreserve betrieben. Wird der Motor z.B. mit einer mittleren Drehmomentreserve von 100% betrieben, d.h. mit einem Motorstrom, der doppelt so hoch wie notwendig ist, so ergibt sich, da die Verlustleistung des Motors proportional zu dem Quadrat des Motorstroms ist, eine um den Faktor vier höhere statische Verlustleistung. Da die entnommene mechanische Leistung bei Schrittmotoren oft gering gegenüber der statischen Verlustleistung ist, kann mit eigentlich unnötigen Energieverlusten im Bereich von 100 bis 300% gerechnet werden. Eine Verminderung dieser Verluste wäre zwar bei Anwendung von Drehsensoren (Positionssensoren, Drehgebern) mit entsprechender Auswertung der Drehstellungen des Rotors möglich. Dieses Konzept wird jedoch für die Vielzahl kostensensitiver Schrittmotoranwendungen abgelehnt, bei denen der Schrittmotor als rein vorwärts gesteuerter Antrieb verwendet wird und bei denen somit Drehwinkelsensoren nicht erforderlich sind.

Aus der EP 0 119 097 A1 sind Schrittmotor-Treiberschaltungen bekannt, bei denen Messeinrichtungen zum Messen eines Stromflusses in dem Motor in der Weise vorgesehen sind, dass daraus eine Rotorposition abgeleitet werden kann, die wiederum zum Ansteuern von Phasen-Steuereinrichtungen zum Verbinden der Motorphasen mit Versorgungsanschlüssen genutzt wird.

Aus der DE 100 06 648 A1 ist ein Verfahren und ein Gerät zum Erfassen des Lastmoments und zum Optimieren des Treiberstroms eines Schrittmotors bekannt, wobei an einem Knoten zwischen mindestens einem Paar von in Reihe verbundenen Windungen des Motors die Dauer von Übergangsspannungsbereichen gemessen und durch Einstellung der Amplitude des Treiberstroms mit einem Zieldauerwert in Übereinstimmung gebracht wird.

Aus der US 2005/0134211 A1 ist eine Schrittmotor-Treibereinrichtung bekannt, die neben einer Chopper-Einheit und einer Steuereinheit dafür eine Gleichrichter-Einheit sowie eine Steuereinheit dafür aufweist, wobei letztere die Gleichrichter-Einheit während einer Zeitperiode, in der die Chopper-Einheit sich in einem nichtleitenden Zustand befindet, in einen leitenden Zustand versetzt, so dass durch die Gleichrichter-Einheit und eine Spule des Schrittmotors ein Strom zirkulieren kann, und die während zumindest eines Teils einer Zeitperiode, in der ein Grenzwert für den Versorgungsstrom durch die Spule absinkt, verhindert, dass die Gleichrichter-Einheit in den leitenden Zustand gelangen kann.

Eine allgemeine Aufgabe, die der Erfindung zugrunde liegt, besteht deshalb darin, nach einer Möglichkeit zu suchen, den Stromverbrauch eines Schrittmotors zu senken, und zwar dadurch, dass dieser in Abhängigkeit von einer momentanen, tatsächlich anliegenden Motorlast nur mit so viel Strom versorgt wird, wie er zum Aufbringen des dafür erforderlichen Drehmoments gerade benötigt.

Der Erfindung liegt somit einerseits die Aufgabe zugrunde, ein Verfahren und eine Schaltungsanordnung zu schaffen, mit dem/der eine momentane, tatsächlich an einem Schrittmotor anliegende mechanische Last oder ein Lastwinkel des Motors sensorlos ermittelt werden kann.

Andererseits liegt der Erfindung die Aufgabe zugrunde, ein Verfahren und eine Schaltungsanordnung zu schaffen, mit dem/der ein Schrittmotor in Abhängigkeit von einer momentanen, tatsächlich an dem Schrittmotor anliegenden mechanischen Last oder einem Lastwinkel des Motors so betrieben werden kann, dass der Stromverbrauch des Motors möglichst gering ist.

Gelöst werden diese Aufgaben mit einem Verfahren nach Anspruch 1 bzw. 7 und einer Schaltungsanordnung gemäß Anspruch 5 bzw. 10.

Ein besonderer Vorteil dieser Lösungen besteht darin, dass sie in relativ einfacher Weise als Bestandteil einer bekannten Schrittmotor-Ansteuerschaltung realisiert werden können, ohne dass Änderungen am mechanischen Aufbau des Motors oder zusätzliche mechanische Komponenten wie z.B. Drehsensoren erforderlich sind.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten, beispielhaften Ausführungsformen anhand der Zeichnung. Es zeigt:
- Fig. 1: Schaltbilder mit verschiedenen Spulenstromphasen in einer Motorspule während eines Chopperbetriebes;
- Fig. 2: ein Diagramm der zeitlichen Zusammenhänge und Verläufe einer an einem Motor anliegenden Last, einer sich daraus ergebenden Lastsumme sowie einem damit geregelten Motorstrom; und
- Fig. 3: ein Prinzipschaltbild einer Schrittmotor-Ansteuereinheit mit den zur Durchführung der erfindungsgemäßen Verfahren wesentlichen Komponenten.

Zunächst sollen die grundsätzlichen Abläufe des erfindungsgemäßen Verfahrens beschrieben werden, die nicht auf die beschriebenen Ausführungsformen beschränkt sind. Dabei wird von der Tatsache Gebrauch gemacht, dass der Lastwinkel eines Motors, d.h. der Winkel zwischen dem Rotor des Motors und der Hauptrichtung des von den Spulen erzeugten magnetischen Feldes mit steigender (mechanischer) Motorlast ebenfalls ansteigt.

Die Richtung des Rotors ist dabei durch seine Magnetisierung definiert. Ohne mechanische Last ist der Winkel des Rotors gleich der Hauptrichtung des von den Spulen erzeugten Magnetfeldes - dies entspricht einem Lastwinkel von 0°. Ist bei einem zweipoligen Motor die Richtung der Magnetisierung des Rotors orthogonal zur Hauptrichtung des von den Spulen erzeugten Magnetfeldes, so entspricht dies einem Lastwinkel von 90°. Bei einem zweipoligen Motor entspricht somit der Lastwinkel bei stehendem Motor direkt der vom Drehmoment an der Motorachse verursachten mechanischen Auslenkung um die Ruhelage (ohne Last mit Lastwinkel 0°). Bei höher-poligen Motoren ist der Lastwinkel ein ganzzahliges Vielfaches dieser mechanischen Auslenkung um die Ruhelage. Die Bestimmung des Lastwinkels würde daher bei hoch-poligen Motoren sehr hochauflösende Drehgeber und sehr präzise Strommessungen erfordern.

Die erfindungsgemäße Bestimmung der mechanischen Motorlast, die durch den Lastwinkel repräsentiert wird, beruht auf der durch die Drehung des Rotors in den Motorspulen gegeninduzierten Spannung (Gegen-EMK) und insbesondere darauf, wie hoch der Betrag dieser Gegen-EMK ist, der mittels der bekannten Chopper-Steuerung weggeregelt wird, um einen vorgegebenen Stromverlauf in der betreffenden Motorspule insbesondere während eines fallenden Betrages des Spulenstroms, also im Falle einer sinusförmigen Stromvorgabe während des zweiten und vierten Quadranten, zu erzielen.

Zur Beseitigung der durch die Gegen-EMK verursachten, in der Spuleninduktivität gespeicherten Energie dient die Fast-Decay-Phase der Chopper-Steuerung des Motors. Die Chopper-Steuerung dient bekanntlich dazu, für jede Motorspule aus einer zugeführten Motor-Versorgungsspannung die in die Spule entsprechend der Stromvorgabe jeweils einzuprägende Stromrichtung, Stromhöhe und Stromform (im Mikroschrittbetrieb üblicherweise eine sinus- bzw. cos-Form) zu erzeugen, um damit den Rotor anzutreiben.

Solche Chopper-Steuerungen bzw. Verfahren sind allgemein bekannt, wobei drei verschiedene Spulenstromphasen unterschieden werden, die zeitlich so aufeinander abgestimmt sind, dass der Strom durch die Motorspulen möglichst genau einer Stromvorgabe (also z.B. einer sinus- bzw. cos-Form) folgt und durch die Gegen-EMK möglichst nicht verändert wird:
In der ON-Phase wird der Spulenstrom in eine Spule jeweils in Richtung der momentan vorgegebenen Polarität bzw. Richtung des Spulenstroms aktiv durch die Spule getrieben, so dass der Spulenstrombetrag relativ schnell und kontinuierlich ansteigt (Einschaltperiode). Die durch eine ON-Phase eingeprägte Spulenstromrichtung ist also gleich der momentanen Polarität bzw. Richtung des Spulenstroms.

Die Polarität des Spulenstromes ist dabei im Falle eines sinusförmigen Spulenstromes z.B. positiv im ersten und zweiten Quadranten und negativ im dritten und vierten Quadranten.

In der Fast-Decay-(FD-) Phase wird der Spulenstrom entgegen der gerade vorgegebenen Polarität des Spulenstroms durch Umpolung der Spule und Rückspeisung des Spulenstroms in die Stromversorgung aktiv wieder abgebaut. Die FD-Phase dient dazu, den Spulenstrom insbesondere in den Phasen fallenden Spulenstrombetrages (d.h. während des zweiten und vierten Quadranten eines sinusförmigen Spulenstroms) relativ schnell abzubauen und zu verhindern, dass die Stromvorgabe insbesondere durch die Gegen-EMK verfälscht wird.

Als dritte Phase des Chopper-Betriebes ist die Rezirkulationsphase oder Slow-Decay-(SD-) Phase zu nennen, in der die Spule nicht aktiv angesteuert wird sondern kurzgeschlossen bzw. gebrückt ist, so dass der Spulenstrom aufgrund des Innenwiderstandes der Spule und der Gegen-EMK nur allmählich (d.h. langsamer als während der FD-Phase) abfällt.

Diese drei Spulenstromphasen werden also durch das Chopper-Verfahren zeitlich so aktiviert, bemessen und kombiniert, dass der tatsächliche Spulenstrom über seinen gesamten (z.B. sinusförmigen) Verlauf, also während der steigenden und der fallenden Stromphasen, möglichst zeitnah und genau einer Stromvorgabe (Spulen-Sollstrom) folgt und insbesondere durch die durch den Rotor in den Motorspulen gegeninduzierte Spannung (Gegen-EMK) nicht (wesentlich) verändert wird.

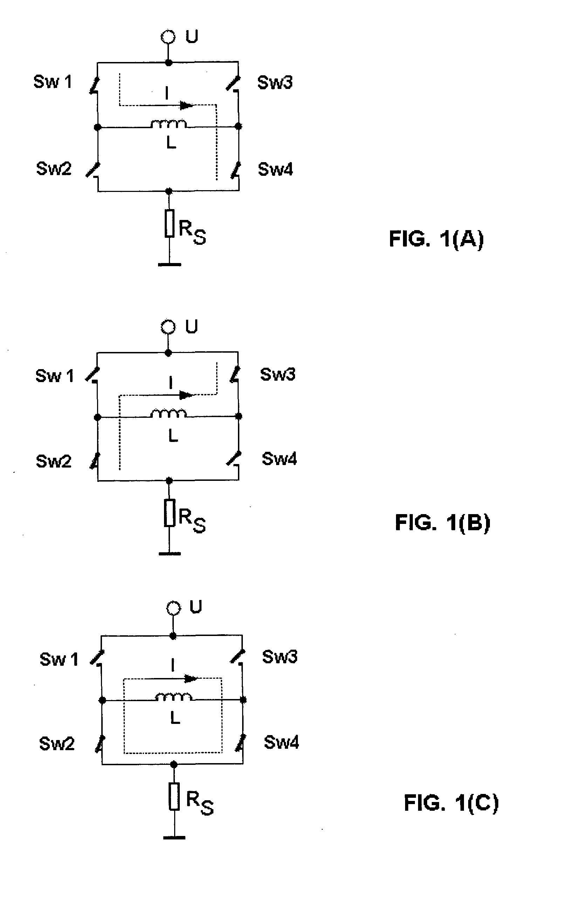

Diese drei Spulenstromphasen sind schematisch in Figur 1(A), Figur 1(B) bzw. Figur 1(C) angedeutet. Diese drei Figuren zeigen jeweils eine Brückenschaltung aus einem ersten bis vierten Schalter Sw1, Sw2, Sw3, Sw4, wobei ein erster und ein zweiter Schalter Sw1, Sw2 sowie ein dritter und ein vierter Schalter Sw3, Sw4 jeweils in Reihe geschaltet und die beiden Reihenschaltungen parallel miteinander verbunden sind. Die Spule L ist mit den Mittelpunkten der Brückenzweige verbunden. Der Fußpunkt der Brückenschaltung ist typischerweise über einen Messwiderstand RSENSE mit Masse verbunden, während der Kopf der Brückenschaltung an eine Spannungs- bzw. Stromversorgung U der Treiberschaltung angeschlossen ist.

Figur 1(A) zeigt die Schalterstellungen und die daraus resultierende Richtung des Stromflusses I durch die Spule L in Richtung der Vorgabe während der oben genannten ersten oder ON-Phase, in der diese Richtung die gleiche ist wie die vorgegebene Richtung bzw. Polarität des Spulenstroms, wobei der erste und der vierte Schalter Sw1, Sw4 geschlossen und der zweite und der dritte Schalter Sw2, Sw3 geöffnet sind.

Figur 1(B) zeigt die Schalterstellungen und die daraus resultierende Umpolung der Spule L sowie die Rückspeisung des Spulenstroms I in die Spannungsversorgung U d.h. entgegen der vorgegebenen Richtung bzw. Polarität des Spulenstroms (die hier die gleiche ist wie in Figur 1(A)) während der oben genannten zweiten oder Fast-Decay-Phase, in der der erste und der vierte Schalter Sw1, Sw4 geöffnet und der zweite und der dritte Schalter Sw2, Sw3 geschlossen sind.

Schließlich zeigt Figur 1(C) die dritte oder Slow-Decay-Phase, bei der die Spule L kurzgeschlossen oder gebrückt ist, d.h. der zweite und der vierte Schalter Sw2, Sw4 sind geschlossen, während der erste und der dritte Schalter Sw1, Sw3 geöffnet sind (oder entsprechend umgekehrt), so dass sich der in der Spule L fließende Strom I entsprechend dem Innenwiderstand der Spule L allmählich abbaut, d.h. rezirkuliert.

Der Einfachheit halber wird für die folgenden Betrachtungen eine sinusförmige Strom-Ansteuerung der Spulen angenommen, d.h. bei einem 2-Phasen-Schrittmotor wird eine der Spulen mit einem sinus-förmigen Stromverlauf und die andere Spule mit einem cosinus-förmigen Stromverlauf bestromt. Die Betrachtungen gelten jedoch bei nicht-sinusförmiger Ansteuerung und/oder Mehrphasen-Schrittmotoren entsprechend.

Für die folgenden Betrachtungen werden Phasen fallenden Strombetrages (d.h. während des zweiten und vierten Quadranten des sinusförmigen Spulenstroms), und Phasen steigenden Strombetrages (d.h. während des ersten und dritten Quadranten des sinusförmigen Spulenstroms) in den Spulen L unterschieden. Jeder dieser Stromquadranten wird durch das Chopper-Verfahren in eine durch die Chopperfrequenz (d.h. die Frequenz, mit der sich der Zyklus ON-FD-SD gemäß Figur 1 wiederholt) bestimmte, geeignete Anzahl von ON-, FD- und ggf. SD-Phasen aufgelöst, sodass der tatsächliche Spulenstrom, durch die Anzahl dieser ON-, FD- und ggf. SD-Phasen abgetastet, der sinusförmigen Stromvorgabe (Spulen-Sollstrom) möglichst genau folgt.

Wenn ein Motor mit geringem Lastwinkel, also z.B. im Leerlauf betrieben wird, so wird während eines fallenden Betrages des Spulenstroms I(t) relativ viel von der Energie aus dem Motor zurückgespeist, die in der vorangegangenen Phase steigenden Strombetrages in den Motor eingespeist wurde. In diesem Fall ist in der Phase fallenden Strombetrages entweder ein insgesamt nur relativ geringer Anteil an ON-Phasen notwendig, der im Wesentlichen der Kompensation ohm'scher Verluste in der Spule dient, oder sogar, je nach Betriebszustand des Motors, gar keine ON-Phase. Prinzipiell wird im Leerlauf des Motors die gesamte Energie, die zur Realisierung der Stromvorgabe in der Spule (d.h. des Zielstroms in der Spule) aufgebracht werden muss, wieder in die Stromversorgung zurückgespeist (soweit die Energie nicht am ohm'schen Innenwiderstand der Motorspulen abgefallen ist oder aber durch Wirbelstromverluste oder mechanische Reibung verbraucht wurde) und wird während der FD-Phasen abgebaut, die in diesem Fall somit im Vergleich zu den ON-Phasen relativ lang sein müssen.

Wenn der Lastwinkel hingegen ansteigt bzw. relativ groß wird und z.B. etwa 90° erreicht, d.h. die am Motor anliegende Last den Bereich des maximalen Drehmoments des Motors erreicht, so gilt während eines fallenden Betrages des Spulenstroms I(t) für die ON-Phasen nach wie vor das gleiche wie im obigen Fall des geringen Lastwinkels. Während der FD-Phasen wird jedoch aus den Motorspulen mit steigendem Lastwinkel, d.h. steigender Last immer weniger Energie und schließlich im Wesentlichen nur noch die in der Spuleninduktivität gespeicherte Energie zurückgespeist (d.h. im Wesentlichen die Energie, die während der relativ kurzen ON-Phasen eingespeist wurde), abzüglich der Energie, mit der die ohm'schen Verluste am Innenwiderstand der Motorspulen etc. kompensiert werden. Die zeitliche Dauer tFD der FD-Phasen wird folglich mit gegen 90° strebendem Lastwinkel immer kürzer und nähert sich an die (kurze) zeitliche Dauer tON der ON-Phasen an.

Somit kann also der Lastwinkel eines Motors während eines fallenden Betrages des Spulenstroms I(t) anhand der Differenz der während der ON-Phasen in den Motor eingespeisten Energie (= tON * U * I(t)) und der während der FD-Phasen zurückgespeisten Energie (= tFD * (-U) * I(t)) ermittelt werden. Die Versorgungsspannung U ist dabei konstant, während der Strom I(t) der Spulenstrom ist und der Spulenstrom-Vorgabe folgt (also z.B. sinus- bzw. cosinus-förmig ist). Die Zeiten tON und tFD werden in bekannter Weise durch die Chopper-Steuerung (PWM-Steuerung) anhand von Spulenstrommessungen geeignet eingestellt, so dass diese Zeiten zur erfindungsgemäßen Auswertung zur Verfügung stehen bzw. bekannt sind.

In dem Punkt, in dem während eines fallenden Betrages des Spulenstroms I(t) die ON- und die FD-Phasen jeweils gleich lang sind und somit die in den Motor eingespeiste Energie (tON * U * I(t)) gleich der zurückgespeisten Energie (tFD * (-U) * I(t)) ist, ist der Lastwinkel daher in der Nähe von 90°, und der Motor wird im Wesentlichen mit maximalem Drehmoment betrieben.

Die Differenz zwischen diesen beiden Energien E = tON * U * I(t) -tFD * U * I(t) ist dann Null. U und I(t) ist dabei in beiden Energie-Termen als etwa gleich anzunehmen, da die ON- und FD-Phasen zeitlich direkt aufeinander folgen (zwischen beiden kann je nach Programmierung des Chopperalgorithmus zwar eine kurze, im allgemeinen zeitlich konstante SD-Phase liegen, diese ist jedoch unabhängig von der Motorlast und beeinflusst die Energiedifferenz E nicht relevant).

Wenn umgekehrt aufgrund einer geringeren, an dem Motor anliegenden Last (und somit eines kleineren Lastwinkels) die FD-Phasen während eines fallenden Betrages des Spulenstroms I(t) immer länger werden müssen, um die zurückgespeiste Energie abbauen zu können, wird die oben genannte Differenz E negativ.

Hinsichtlich der Differenz E wird bevorzugt eine geringfügige Kompensation für die ohm'schen Verluste am Innenwiderstand der Motorspulen und ggf. andere Verluste (s.o.) vorgenommen, um einen Lastwinkel von 90° exakt erfassen zu können. Dies geschieht durch einen vorzugsweise einstellbaren, motorabhängigen Offsetwert (Korrekturwert) K, mit dem die Abweichung des realen Motors von einem idealen, d.h. verlustfreien Motor kompensiert wird. Eine Abweichung der oben genannten Differenz E von Null zeigt dann eine Abweichung des Lastwinkels von 90° an. Umgekehrt kann also die Höhe des Motorstroms I(t) in Abhängigkeit von der am Motor anliegenden Last (und somit der Differenz E) so geregelt werden, dass der wie oben ermittelte Lastwinkel stets genau oder etwa 90° beträgt oder bevorzugt etwas unter 90° liegt, um Schrittverluste sicher zu vermeiden.

Die oben genannte Differenz E wird zum Zwecke der Motorstromregelung vorzugsweise über die Phase fallenden Betrages des Spulenstroms I(t) integriert, d.h. es wird eine Lastsumme Ls als das Produkt aus der Versorgungsspannung U mit dem zeitlichen Integral über die Phase fallenden Strombetrages von (tON * I(t) + K - tFD * I(t)) dt berechnet. Bei einem Lästwinkel von 90° ist diese Lastsumme Ls dann Null, während bei einem Lastwinkel von 0°, d.h. im Leerlauf des Motors, die Lastsumme Ls maximal ist.

Es hat sich gezeigt, dass Schrittmotoren aufgrund von Anisotropien der Magnetpole bzw. deren Stellung zueinander im Bereich einer elektrischen Periode in einigen Fällen keine gleichmäßige Gegen-EMK erzeugen, sondern dass diese innerhalb einer elektrischen Periode im Bereich mehrerer Prozent schwanken kann. Diese Schwankung zeigt sich dann auch an den über die Phasen fallenden Strombetrages gebildeten Lastsummen. Deshalb wird bevorzugt eine Mittelung von mehreren, jeweils während einer Phase fallenden Betrages des Spulenstroms ermittelten Lastsummen Ls vorgenommen, durch die die oben beschriebene Motorlast- bzw. Lastwinkelmessung deutlich verbessert werden kann.

Nachdem also auf diese Weise der Lastwinkel in Form der o.g. Differenz E bzw. der Lastsumme Ls ermittelt wurde, kann nun der Motorstrom so geregelt werden, dass die Differenz E bzw. die Lastsumme Ls und damit der Lastwinkel innerhalb eines bestimmten Bereiches bleibt, d.h. der Motor-Spulenstrom wird so geregelt, dass er einerseits ausreichend hoch ist, um das Motor-Drehmoment zu erzeugen, das zum Drehen der an der Motorachse momentan anliegenden (mechanischen) Motorlast erforderlich ist, andererseits aber auch nicht wesentlich höher. Mit anderen Worten wird der Motorstrom so geregelt, dass der Lastwinkel des Motors immer möglichst hoch, d.h. im Bereich von 90°, vorzugsweise jedoch geringfügig unterhalb von 90° liegt, um die Gefahr von Schrittverlusten zu vermeiden. Auf diese Weise kann die Verlustleistung des Motors gegenüber dem bekannten Betrieb bei stets maximalem Strom erheblich gesenkt werden, ohne das Risiko von Schrittverlusten zu erhöhen.

Zur Regelung des Motorstroms wird vorzugsweise ein Regler verwendet, der einen ersten Komparator für eine untere Regelschwelle H, die bei einer niedrigen Lastsumme Ls (d.h. einem hohen Lastwinkel) gesetzt wird, sowie einen zweiten Komparator für eine obere Regelschwelle R, die bei einer hohen Lastsumme Ls (d.h. einem niedrigen Lastwinkel) gesetzt wird, aufweist.

Dabei wird, wenn die Lastsumme Ls die untere Regelschwelle H unterschreitet (d.h. beim Überschreiten des gesetzten hohen Lastwinkels) der Motorstrom I vorzugsweise schnell hochgeregelt, d.h. innerhalb eines oder weniger Messzyklen der Lastsumme Ls auf einen maximalen Stromwert Imax erhöht, bis bei einer der nachfolgend gemessenen Lastsummen Ls diese die untere Regelschwelle H wieder übersteigt (und damit der Lastwinkel wieder entsprechend abfällt). Auf diese Weise kann der Motor schnell auf einen Lastanstieg reagieren, und das Risiko von Schrittverlusten durch Überschreiten eines Lastwinkels von 90° wird weiter vermindert.

Damit der Regler nicht instabil wird, wird hingegen beim Überschreiten der oberen Regelschwelle R (d.h. beim Unterschreiten des gesetzten niedrigen Lastwinkels) der Motorstrom I vorzugsweise nicht genauso schnell, sondern mit im Vergleich zum schnellen Hochregeln des Stroms kleineren Schritten, d.h. langsamer, wieder heruntergeregelt.

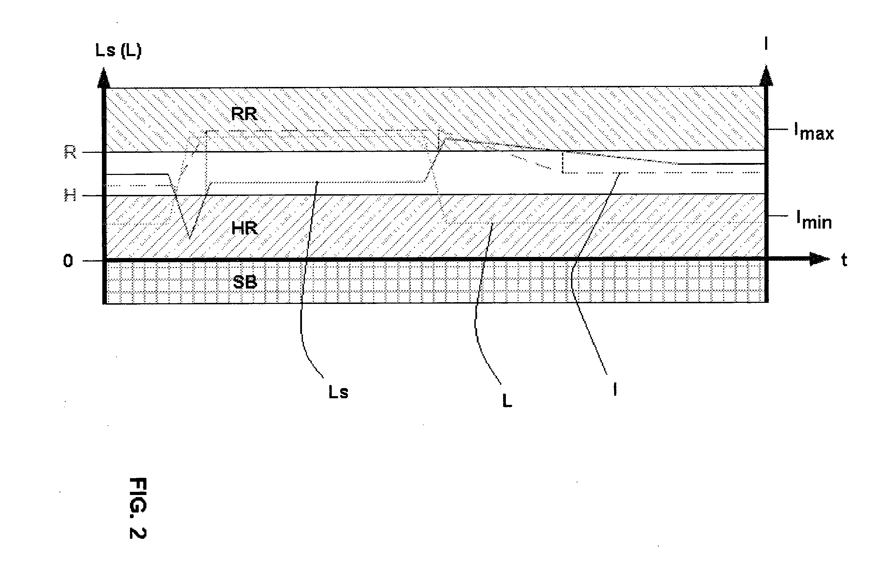

Im Einzelnen sind diese zeitlichen Verläufe der Lastsumme Ls und der Höhe des Spulenstroms I sowie deren Zusammenhänge für dieses Regelverfahren im Diagramm der Figur 2 dargestellt, wobei auch ein angenommener Verlauf einer Motorlast L eingezeichnet ist.

Auf der horizontalen Achse ist dabei die Zeit t und auf der linken vertikalen Achse die Lastsumme Ls in Pfeilrichtung nach oben ansteigend aufgetragen, während auf der rechten vertikalen Achse der Motor-Spulenstrom I in Pfeilrichtung nach oben ansteigend aufgetragen ist.

Auf der linken vertikalen Achse ist ferner die oben genannte untere Regelschwelle H sowie die oben genannte obere Regelschwelle R für die Lastsumme Ls aufgetragen.

Bei einer Lastsumme Ls von Null liegt die im Verhältnis zum momentan eingestellten Motorstrom I maximale Motorlast an, die einen Lastwinkel von im Wesentlichen 90° zur Folge hat. Auf der rechten vertikalen Achse ist ein minimaler Motor-Spulenstrom Imin und ein maximaler Motorstrom Imax markiert.

Weiterhin sind in diesem Diagramm drei Regelbereiche markiert, nämlich ein Hochregelbereich HR, in dem der Motorstrom I erhöht wird, sowie ein Runterregelbereich RR, in dem der Motorstrom I vermindert wird. Schließlich ist auch ein Stallbereich SB des Motors angedeutet, der beim Überschreiten einer im Verhältnis zum momentan eingestellten Motorstrom maximalen Motorlast erreicht wird und bei dem Schrittverluste auftreten können.

Die Kurve L bezeichnet einen angenommenen zeitlichen Verlauf einer an der Motorwelle anliegenden mechanischen Motorlast, und zwar in Pfeilrichtung nach oben ansteigend dargestellt. Die Kurve I bezeichnet den zeitlichen Verlauf der Höhe des Motorstroms, während die Kurve Ls den zeitlichen Verlauf der den Lastwinkel repräsentierenden Lastsumme darstellt, wobei der Lastwinkel, wie oben erläutert, durch die momentane Motorlast L und den momentan eingestellten Motorstrom I bestimmt wird.

Wenn sich also gemäß Figur 2 die Motorlast L und damit der Lastwinkel erhöht, so fällt bei zunächst unverändertem Motorstrom I die Lastsumme Ls gemäß obigen Berechnungen ab. Wenn dabei die Lastsumme Ls die untere Regelschwelle H nach unten unterschreitet (und somit ein gesetzter hoher Lastwinkel überschritten wird), so wird der Motorstrom I wie oben erläutert relativ schnell erhöht, bis die Lastsumme Ls die untere Regelschwelle H wieder nach oben überschreitet (und somit der Lastwinkel den gesetzten hohen Lastwinkel wieder unterschreitet). Bei unverändert erhöhter Motorlast L bleibt dann der Motorstrom I auf einem hohen oder maximalen Wert Imax konstant, bis die Motorlast L wieder abfällt. Wenn dabei bei unverändertem hohen Motorstrom Imax die Lastsumme Ls die obere Regelschwelle R nach oben überschreitet, d.h. der Lastwinkel unterschreitet einen gesetzten niedrigen Wert, so wird der Motorstrom I (wie oben erläutert langsam) heruntergeregelt, bis die Lastsumme Ls die obere Regelschwelle R wieder nach unten unterschreitet.

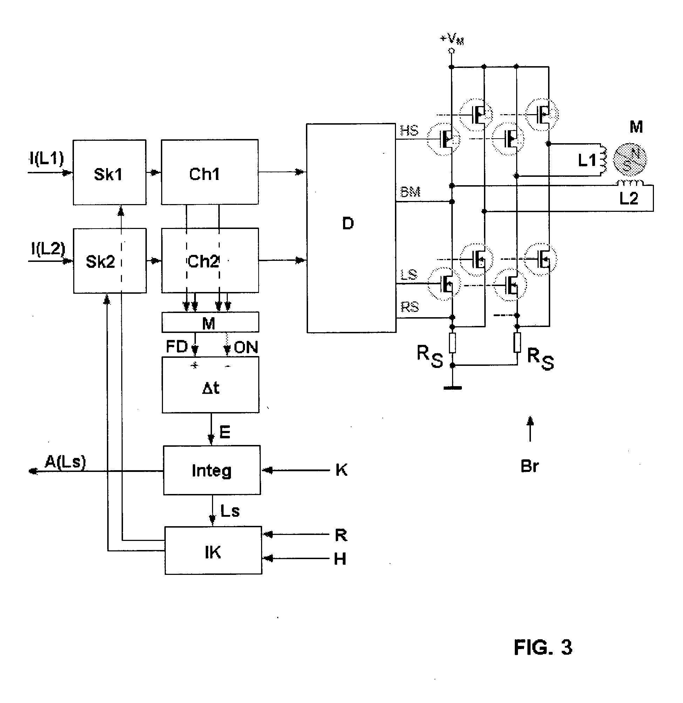

Figur 3 zeigt beispielhaft ein schematisches Blockschaltbild zur Durchführung des erfindungsgemäßen Verfahrens als Teil einer Schaltungsanordnung zur Ansteuerung eines Schrittmotors M. Es sei wiederum ein 2-Phasen-Schrittmotor mit einer ersten und einer zweiten Motorspule L1, L2 angenommen, die in bekannter Weise über jeweils eine Leistungstreiber-Brückenschaltung Br bestromt werden. Eine bekannte Motor-Treibereinheit D dient zur Ansteuerung der Leistungstreiber-Brückenschaltung Br. Da diese Schaltungsteile in verschiedenen Formen allgemein bekannt sind und hinsichtlich ihrer Funktion anhand von Figur 1 beschrieben wurden, brauchen sie hier nicht weiter erläutert zu werden.

Die Schaltungsanordnung umfasst weiterhin für die erste und die zweite Motorspule L1, L2 jeweils eine erste bzw. eine zweite Choppereinheit Ch1, Ch2, denen jeweils über einen ersten bzw. einen zweiten Skalierer Sk1, Sk2 ein vorgegebener Stromverlauf I(L1), I(L2) für die erste bzw. die zweite Spule L1, L2 zugeführt wird. Die vorgegebenen Stromverläufe I(L1), I(L2) für die beiden Motorspulen L1, L2 haben im Allgemeinen sinus- bzw. cos-Form, deren Amplituden und Frequenzen in bekannter Weise so erzeugt werden, dass sich der Motor M in einer gewünschten Richtung und mit einer gewünschten Geschwindigkeit dreht.

Die Choppereinheiten Ch1, Ch2 dienen jeweils sowohl zur Erzeugung der Chopper-Taktsignale, mit denen gemäß obigen Erläuterungen während der ON-Phasen der Spulenstrom aktiv durch die Spulen L1, L2 getrieben wird, als auch der Schaltsignale für die Leistungstreiber-Brückenschaltung Br zum Umpolen der Spulen L1, L2 zum aktiven Abbau der Spulenströme während der FD-Phasen sowie zum Kurzschließen der Spulen L1, L2 während der SD-Phasen gemäß obigen Erläuterungen im Zusammenhang mit Figur 1. Da diese Choppereinheiten Ch1, Ch2 ebenfalls an sich bekannt sind, braucht darauf nicht näher eingegangen zu werden.

Zur erfindungsgemäßen Einstellung der Höhe der Spulenströme dient der erste bzw. der zweite Skalierer Sk1, Sk2, die mit in der nachfolgend beschriebenen Weise erzeugten Steuersignalen angesteuert werden.

Die beiden Choppereinheiten Ch1, Ch2 sind nicht nur mit der Motor-Treibereinheit D verbunden, sondern weisen auch jeweils zwei Ausgänge auf, an denen die Zeitdauern tON bzw. tFD anliegen, während der die ON- bzw. die FD-Phasen aktiviert sind. Diese Ausgangssignale werden einem Multiplexer M zugeführt, an dessen beiden Ausgängen ON und FD die Zeiten tON bzw. tFD abwechselnd für die erste und die zweite Spule L1, L2 anliegen.

Mit den Ausgängen ON und FD des Multiplexers M sind die Eingänge einer Einrichtung Δt zur Differenzbildung verbunden, mit der gemäß obigen Erläuterungen die Differenz E zwischen den Zeiten tON und tFD gebildet wird. Diese Differenz E wird dann über den Ausgang der Einrichtung Δt einem Integrator Integ zugeführt, an dem auch der oben genannte Offset- oder Korrekturwert K für die ohm'schen und andere Verluste in den Spulen L1, L2 anliegt. Mit dem Integrator Integ wird dann wie oben erläutert die Lastsumme Ls als das Produkt aus der Versorgungsspannung U mit dem zeitlichen Integral über die Phase fallenden Strombetrages von (E + K) dt berechnet und vorzugsweise auch die oben erläuterte Mittelwertbildung über mehrere Lastsummen Ls vorgenommen.

Die für beide Motorspulen L1, L2 ermittelten Lastsummen Ls werden nun zum einen an einen Ausgang A(Ls) des Integrators Integ geführt, um damit z.B. einen entsprechenden, den Lastwinkel oder die anliegende mechanische Motorlast darstellenden Messwert für einen Benutzer anzuzeigen oder für andere Messungen bzw. Auswertungen zur Verfügung zu stellen. Die auf diese Weise sensorlos erfasste Motorlast kann somit unabhängig von der damit vorgenommenen, lastwertabhängigen Motorstromregelung auch für andere Zwecke verwendet werden.

Zum anderen werden die Lastsummen Ls nacheinander einem Stromregler Ik zugeführt, der auch den ersten Komparator für die untere Regelschwelle H und den zweiten Komparator für die obere Regelschwelle R aufweist. Der Stromregler Ik umfasst somit auch zwei weitere Eingänge für die obere bzw. die untere Regelschwelle R, H, die vorzugsweise vom Benutzer oder auf andere Weise vorgegeben oder eingestellt werden können. Mit dem Stromregler Ik wird für jede der beiden Motorspulen L1, L2 ein Skalierwert erzeugt, der für die erste Motorspule L1 dem ersten Skalierer Sk1 und für die zweite Motorspule L2 dem zweiten Skalierer Sk2 zugeführt wird, und mit dem der zugeführte vorgegebene Strom I(L1), I(L2) für diese beiden Spulen L1, L2 jeweils in Abhängigkeit von der ermittelten Lastsumme Ls (und somit dem Lastwinkel) gemäß obigen Erläuterungen insbesondere im Zusammenhang mit Figur 2 entsprechend erhöht bzw. vermindert wird.

## Patentansprüche

1. Verfahren zur sensorlosen Motorlast- oder Lastwinkelerfassung bei einem Schrittmotor, der im Chopperbetrieb mit ON- und FD- (Fast-Decay) Phasen angesteuert wird, **dadurch gekennzeichnet, dass**
eine Lastsumme (Ls) in Form des Produktes aus der Versorgungsspannung des Motors mit dem zeitlichen Integral über die Phase fallenden Spulen-Strombetrages von (tON * I(t) -tFD * I(t)) dt berechnet wird, wobei tON die Zeitdauer der ON-Phasen, tFD die Zeitdauer der FD-Phasen und I(t) der durch mindestens eine der Spulen des Motors fließende Strom ist, und wobei der Lastwinkel zu etwa 90° bzw. die Motorlast als maximal angenommen wird, wenn die Lastsumme (Ls) zumindest im Wesentlichen Null ist.

2. Verfahren nach Anspruch 1,
bei dem der Spulenstrom I(t) in dem Term (tON * I(t) -tFD * I(t)) jeweils etwa gleich groß ist.

3. Verfahren nach Anspruch 1,
bei dem ein vorzugsweise einstellbarer, motorabhängiger Offset- oder Korrekturwert (K) zur Kompensation von insbesondere ohmschen Verlusten an den Innenwiderständen der Motorspulen (L1, L2) vorgesehen ist, mit dem das Integral von (tON * I(t) + K - tFD * I(t)) dt berechnet wird.

4. Verfahren nach Anspruch 1,
bei dem eine Mittelung von mehreren, während mehrerer Phasen fallenden Betrages des Spulenstroms ermittelten Lastsummen (Ls) vorgenommen wird, um einen Lastwinkel bzw. eine Motorlast zu bestimmen.

5. Schaltungsanordnung zur sensorlosen Motorlast- oder Lastwinkelerfassung bei einem Schrittmotor mit Chopperregelung, insbesondere zur Durchführung eines Verfahrens nach einem der Ansprüche 1 bis 4,
mit einer Einrichtung (Δt) zur Differenzbildung, mit der während eines fallenden Betrages eines durch mindestens eine der Spulen des Motors fließenden Stroms (I(t)) die Differenz (E) zwischen den durch die Chopperregelung festgelegten Zeitdauern tON der ON-Phasen und tFD der FD-Phasen ermittelt wird, sowie mit einem Integrator (Integ), dem diese Differenz (E) zugeführt wird und mit dem eine Lastsumme (Ls) in Form des Produktes aus der Versorgungsspannung des Motors mit dem zeitlichen Integral über die Phase fallenden Spulen-Strombetrages von (E * I(t)) dt berechnet wird, wobei der Lastwinkel zu etwa 90° bzw. die Motorlast als maximal angenommen wird, wenn die Lastsumme (Ls) zumindest im Wesentlichen Null ist.

6. Schaltungsanordnung nach Anspruch 5,
bei der an dem Integrator (Integ) ein motorabhängiger Offset- oder Korrekturwert (K) zur Kompensation von insbesondere ohmschen Verlusten an den Innenwiderständen der Motorspulen (L1, L2) anliegt, wobei das Integral von (E * I(t) + K) dt gebildet wird.

7. Verfahren zur Regelung eines Motorstroms bei einem Schrittmotor, bei dem ein Lastwinkel oder eine Motorlast des Motors gemäß einem Verfahren nach einem der Ansprüche 1 bis 4 ermittelt und der Motorstrom in Abhängigkeit davon so geregelt wird, dass der Lastwinkel etwa 90° beträgt.

8. Verfahren nach Anspruch 7,
bei dem der Motorstrom (I) bei einer sich erhöhenden Motorlast schneller erhöht wird, als er bei einer sich vermindernden Motorlast vermindert wird.

9. Verfahren nach Anspruch 7,
bei dem eine untere Regelschwelle (H) festgelegt wird, bei der der Motorstrom (I) erhöht wird, wenn die Lastsumme (Ls) die untere Regelschwelle (H) nach unten unterschreitet, und eine obere Regelschwelle (R) festgelegt wird, bei der der Motorstrom (I) vermindert wird, wenn die Lastsumme (Ls) die obere Regelschwelle (R) nach oben überschreitet.

10. Schaltungsanordnung zur Regelung eines Motorstroms bei einem Schrittmotor, mit einer Schaltungsanordnung nach Anspruch 5,
mit einem jeder Choppereinheit (Ch1, Ch2) für jede Spule (L1, L2) des Motors (M) jeweils vorgeschalteten Skalierer (Sk1, Sk2) für einen vorgegebenen Spulenstrom (IL1, IL2), sowie mit einem Stromregler (Ik) zur Erzeugung jeweils eines Skalierwertes für die Skalierer (Sk1, Sk2) aus einem zugeführten, einen Lastwinkel des Motors repräsentierenden Wert (E; Ls) in der Weise, dass der Lastwinkel in einen Bereich von etwa 90° geregelt wird.

11. Schaltungsanordnung nach Anspruch 10,
bei der der Stromregler (Ik) einen ersten Komparator für eine untere Regelschwelle (H) und einen zweiten Komparator für eine obere Regelschwelle (R) sowie Eingänge für die obere und die untere Regelschwelle (R, H) zur Regelung des Motorstroms gemäß Anspruch 9 aufweist.

## Claims

1. Method for sensor-free motor load or load angle detection in a stepper motor that is controlled with ON and FD (fast decay) phases during chopper operation, **characterized in that**:
a load sum (Ls) is calculated in the form of the product of the supply voltage of the motor and the temporal integral during the phase of a decreasing amount of a coil current of (tON * I(t) -tFD * I(t)) dt, wherein tON is the temporal duration of the ON phases, tFD is the temporal duration of the FD phases and I(t) is the current that flows through at least one of the coils of the motor, and wherein the load angle is assumed to be approximately 90° and, respectively, the motor load is assumed to be at a maximum when the load sum (Ls) is at least essentially zero.

2. Method according to claim 1,
in which the coil current I(t) in the term (tON * I(t) tFD * I(t)) is assumed to be substantially equal.

3. Method according to claim 1,
in which a motor-based offset or correction value (K), which is preferably adjustable, is provided for compensating in particular ohmic losses on the internal resistances of the motor coils (L1, L2), and with which the integral of (tON * I(t) + K-tFD * I(t)) dt is calculated.

4. Method according to claim 1,
in which an averaging of a plurality of load sums (Ls) that are determined during a plurality of phases of decreasing amount of the coil current is conducted in order to determine a load angle and, respectively, a motor load.

5. Circuit arrangement for sensor-free motor load or load angle detection in a stepper motor with chopper control, in particular for carrying out a method according to one of claims 1 to 4, comprising:
a device (Δt) for determining a difference with which, during a decreasing amount of a current (I(t)) flowing through at least one of the coils of the motor, the difference (E) between the time periods tON of the ON phases and tFD of the FD phases, that are defined by the chopper control, is determined, and
an integrator (Integ) to which this difference (E) is routed and with which a load sum (Ls) is calculated in the form of the product of the supply voltage of the motor and the temporal integral during the phase of a decreasing amount of the coil current of (E * I(t)) dt, wherein the load angle is assumed to be approximately 90° and, respectively, the motor load is assumed to be at a maximum when the load sum (Ls) is at least essentially zero.

6. Circuit arrangement according to claim 5,
in which a motor-based offset or correction value (K) is applied at the integrator (Integ) for compensating in particular ohmic losses on the internal resistances of the motor coils (L1, L2), wherein the integral of (E * I(t) + K) dt is calculated.

7. Method for controlling a motor current in a stepper motor in which a load angle or a motor load of the motor is determined in accordance with a method according to one of claims 1 to 4, and in which the motor current is controlled in dependence thereon so that the load angle is approximately 90°.

8. Method according to claim 7,
wherein the motor current (I) is increased faster with increasing motor load than it is decreased with decreasing motor load.

9. Method according to claim 7,
wherein a lower control threshold (H) is specified at which the motor current (I) is increased when the load sum (Ls) falls below the lower control threshold (H), and an upper control threshold (R) is specified at which the motor current (I) is decreased when the load sum (Ls) exceeds the upper control threshold (R).

10. Circuit arrangement for controlling a motor current in a stepper motor by means of a circuit arrangement according to claim 5,
comprising a scaling unit (Sk1, Sk2) for a specified coil current (IL1, IL2), each one being connected at the input to each chopper unit (Ch1, Ch2) for each coil (L1, L2) of the motor (M), as well as a current regulator (Ik) for generating a scaling value for each scaling unit (Sk1, Sk2) from a supplied value (E, Ls) that represents a load angle of the motor such that the load angle is controlled in a range of approximately 90°.

11. Circuit arrangement according to claim 10,
in which the current regulator (Ik) comprises a first comparator for a lower control threshold (H) and a second comparator for an upper control threshold (R) as well as inputs for the upper and the lower control threshold (R, H), for controlling the motor current according to claim 9.

## Revendications

1. Procédé pour une détection de charge de moteur ou d'angle de charge sans capteur dans un moteur pas-à-pas (M) qui est commandé avec des phases ON et FD (décroissance rapide) pendant une opération de découpage, **caractérisé en ce que** une somme de charges (Ls) est calculée sous la forme du produit de la tension d'alimentation du moteur et de l'intégrale temporelle pendant une quantité décroissante d'un courant de bobine de (tON * I(t) -tFD * I(t)) dt, où tON est la durée temporelle des phases ON, tFD est la durée temporelle des phases FD, et I(t) est le courant qui circule à travers au moins une des bobines du moteur, et où l'angle de charge est supposé être d'approximativement 90° et, respectivement, la charge de moteur est supposée être à un maximum lorsque la somme de charges (LS) est au moins sensiblement nulle.

2. Procédé selon la revendication 1,
dans lequel le courant de bobine I(t) dans l'expression (tON * I(t) -tFD * I(t)) est supposé être sensiblement égal.

3. Procédé selon la revendication 1,
comportant l'étape consistant à fournir une valeur de décalage ou de correction à base de moteur (K), qui est de préférence ajustable, pour compenser en particulier des pertes ohmiques sur les résistances internes des bobines de moteur (L1, L2) avec lesquelles l'intégrale de (tON * I(t) -tFD * I(t)) dt est calculée.

4. Procédé selon la revendication 1,
comportant l'étape consistant à effectuer une moyenne d'une pluralité de sommes de charge qui sont déterminées pendant une pluralité de phases de quantité décroissante du courant de bobine, afin de déterminer un angle de charge et une charge de moteur, respectivement.

5. Agencement de circuit pour une détection de charge de moteur ou d'angle de charge sans capteur dans un moteur pas-à-pas à l'aide d'une commande de découpage, en particulier pour mettre en oeuvre un procédé selon l'une des quelconque des revendications 1 à 4, comportant:
un dispositif (Δt) pour déterminer une différence avec laquelle, pendant une quantité décroissante d'un courant (I(t)) circulant à travers au moins une des bobines du moteur, la différence (E) entre les périodes de temps tON des phases ON et tFD des phases FD, qui sont définies par la commande de découpage, est déterminée, et
un intégrateur (Integ) vers lequel la différence (E) est routée, et à l'aide duquel une somme de charges (Ls) est calculée sous la forme du produit de la tension d'alimentation du moteur et de l'intégrale temporelle pendant une quantité décroissante du courant de bobine de (E * I(t)) dt, où l'angle de charge est supposé être d'approximativement 90° et, respectivement, la charge de moteur est supposée être à un maximum lorsque la somme de charges (Ls) est au moins sensiblement nulle.

6. Agencement de circuit selon la revendication 5,
dans lequel une valeur de décalage ou de correction à base de moteur (K) est appliquée au niveau de l'intégrateur (Integ) pour compenser en particulier des pertes ohmiques sur les résistances internes des bobines de moteur (L1, L2) où l'intégrale de (E * I(t) + K) dt est calculée.

7. Procédé pour commander un courant de moteur dans un moteur pas-à-pas dans lequel un angle de charge ou une charge de moteur du moteur est déterminé(e) selon un procédé selon l'une quelconque des revendications 1 à 4, et dans lequel le courant de moteur est commandé selon celui-ci ou celle-ci, de sorte que l'angle de charge est d'approximativement 90°.

8. Procédé selon la revendication 7,
dans lequel le courant de moteur (I) est augmenté avec une charge de moteur croissante plus rapidement qu'il n'est diminué avec une charge de moteur décroissante.

9. Procédé selon la revendication 7,
dans lequel un seuil de commande inférieur (H) est spécifié, au niveau duquel le courant de moteur (I) est augmenté lorsque la somme de charges (Ls) tombe sous le seuil de commande inférieur (H), et un seuil de commande supérieur (R) est spécifié, au niveau duquel le courant de moteur (I) est diminué lorsque la somme de charges (Ls) dépasse le seuil de commande supérieur (R).

10. Agencement de circuit pour commander un courant de moteur dans un moteur pas-à-pas par l'intermédiaire d'un agencement de circuit selon la revendication 5,
comportant une unité de calibrage (Sk1, Sk2) pour un courant de bobine spécifié (IL1, IL2), chacune étant connectée au niveau de l'entrée à chaque unité de découpage (Ch1, Ch2) pour chaque bobine (L1, L2) du moteur (M), de même qu'un régulateur de courant (Ik) pour générer une valeur de calibrage pour chaque unité de calibrage (Sk1, Sk2) à partir d'une valeur fournie (E, Ls), qui représente un angle de charge du moteur tel que l'angle de charge est commandé dans une plage d'approximativement 90°.

11. Agencement de circuit selon la revendication 10,
dans lequel le régulateur de courant (Ik) comporte un premier comparateur pour un seuil de commande inférieur (H) et un second comparateur pour un seuil de commande supérieur (R), de même que des entrées pour les seuils de commande supérieur et inférieur (R, H) afin de commander le courant de moteur selon la revendication 9.
